# EUROPÄISCHE PATENTANMELDUNG

(11) **EP 1 211 480 A2**
(43) Veröffentlichungstag der Anmeldung: **05.06.2002**
(21) Anmeldenummer: 01124754.1
(22) Anmeldetag: 17.10.2001
(51) Int. Cl.: G01B 11/27

(54) **Elektrooptisches Messgerät zum Feststellen der Relativlage von Körpern oder von Oberflächenbereichen solcher Körper**

(30) Priorität: 30.11.2000 DE 10059728
(71) Anmelder: Prüftechnik Dieter Busch AG, 85737 Ismaning (DE)
(72) Erfinder: Hermann, Michael, 78050 Villingen-Schwenningen (DE)

(57) **Zusammenfassung**

Zur Erfassung der Relativlage von Körpern, Flächen oder dgl., insbesondere solcher an Maschinen, wird ein optoelektronischer Sensor vorgesehen. Dieser reagiert auf einfallendes Licht, z.B. monochromatisches Laserlicht. Die zur Verfügung stehende Empfangsfläche ist jedoch bei low-cost- oder pixelorientierten Sensoren vergleichsweise klein. Durch Bereitstellung einer Streuscheibe sowie eines projizierenden Objektives vor einen optoelektronischen Sensor kann die nutzbare Empfangsfläche für auffallendes Licht wesentlich vergrössert werden.
Die Streuscheibe oder auch das projizierende Objektiv können zusätzlich als Farbfilter ausgelegt sein und zur Reduzierung von Fremdlichteinflüssen dienen.
*Es wird ein Verfahren angegeben, mit dem eine besonders genaue Bestimmung der Schwerpunktslage eines auf dem Target (optoelektronischen Sensor) auffallenden Laserlicht-Punktes durchgeführt werden kann.*

## Beschreibung

Die Erfindung betrifft eine Vorrichtung zum Feststellen der Relativlage von Körpern, oder von Oberflächenbereichen solcher Körper. Die Erfindung eignet sich speziell zum Ausrichten von Maschinen, oder hintereinander angeordneten Maschinen (Maschinenzügen). Der Erfindung liegt eine vergleichbare Aufgabe zugrunde, wie sie in der WO 98/33039 formuliert ist.

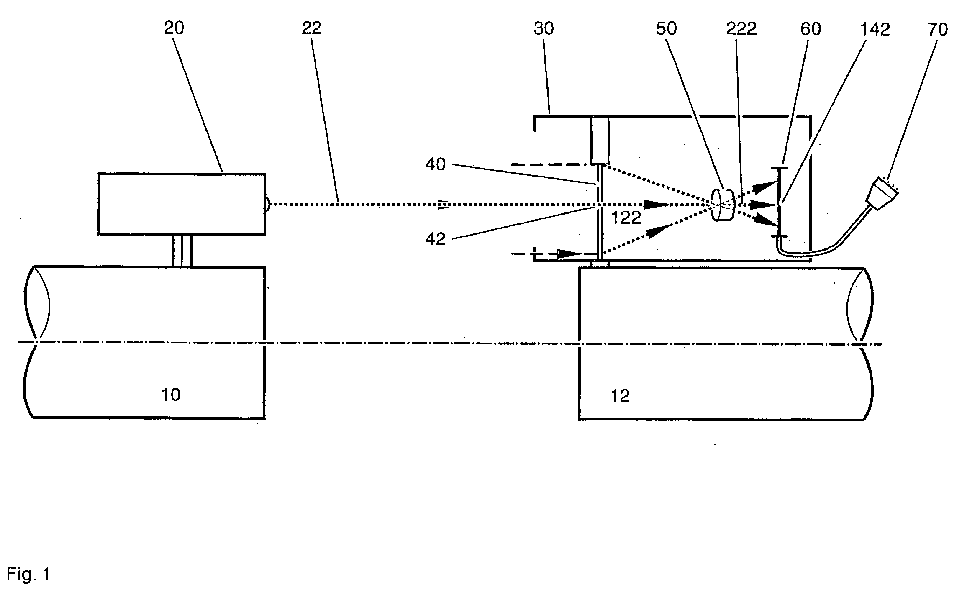

Wie aus der WO98/33039 ersichtlich, weisen bekannte Geräte dieser Art eine Meßanordnung auf, die mindestens einen Lichtstrahlsender und mindestens einen ein- oder mehrachsige optelektronische Positionsdetektor verwendet. Zur Vermeidung von Längen wird auf den Inhalt der genannten WO Anmeldeschrift verweisen, insbesondere deren Zeichnungen Fig. 1 bis Fig. 3.

Aus der WO98/33039 ist somit eine zufriedenstellende Lösung bekannt, wie bei Positionsdetektoren mit für eine Messaufgabe zu kleinen wirksamen Empfangsflächen eine im wesentlichen softwaremässige Bereichserweiterung erzielt werden kann.

Allerdings führt die Anwendung der Lehre aus der genannten WO Anmeldeschrift bei besonders kleinen (i.d.R. kleinflächigen) Positionsdetektoren dazu, dass relativ häufig ein manuelles Umsetzen des Sensorgehäuses erfolgen muss, was das Handling durch eine Bedienperson bei kleinen Sensortypen unzumutbar erschweren würde.

Es ist Aufgabe der Erfindung, eine alternative Lösung zum gestellten Problem zur Bereichserweiterung bei kleinflächigen Positionsdetektoren bereitzustellen, welche ein wesentlich vereinfachtes Handling auch bei stark dejustierten Maschinen ermöglicht. Diese Lösung soll insbesondere den Einsatz von handelsüblichen CCD- oder CMOS-Bildsensoren ermöglichen, welche zwar eine sehr hohe Anzahl einzeln auflösbarer Bildpunkte aufweisen, aber aus Gründen niedrigster Gestehungskosten nur mit möglichst kleiner wirksamer Oberfläche ausgestattet sind. Der direkte Einsatz solcher kostengünstigen CCD- oder CMOS Bildsensoren in einer Einrichtung der gattungsgemässen Art ist nicht praxistauglich und erfordert daher weitergehende Maßnahmen zu deren befriedigender Anwendbarkeit.

Die dargestellte Aufgabe wird dadurch gelöst, dass im Vergleich zu optischen Strahlengängen, wie sie bei herkömmlichen Lichtstrahlsender- und Positionsdetektor-Kombinationen verwendet werden, eine vorteilhafte optische Aufweitung des Strahlenganges vorgenommen wird.
Zu diesem Zweck wird nämlich anstelle einer herkömmlichen Auftreff- oder Targetfläche für einen Lichtstrahl (bevorzugt Laser-Lichtstrahl) nunmehr eine Mattscheibe verwendet, welche typischerweise ca. 2 bis ca. 20-fach grössere lineare Abmessungen aufweist als der zu verwendende Positionsdetektor, und die somit eine entsprechend grössere verwendbare Empfangsfläche darstellt. Auf diese Weise kann problemlos statt einer Messfläche von 0.5 Quadratzentimetern (= 50 Quadratmillimeter) eine verwendbare von z.B. ca. 2 bis 200 Quadratzentimetern bereitgestellt werden, was für das Ausrichten von grossen Maschinen wie Turbinen oder im Schiffbau von erheblichem Vorteil ist.

Gemäß der Erfindung wird nämlich zusätzlich zur genannten Mattscheibe eine Projektionseinrichtung verwendet, welche die Mattscheibe vermittels eines Objektives winkel -und maßstabsgetreu auf den zu verwendenden Positionsdetektor abbildet, und dabei eine lineare Verkleinerung von ca. 2 bis 20-fach vornimmt.
Gemäß der Erfindung ist es wichtig, möglichst nur diffuse Streulichtanteile auf den optoelektronischen Positionsdetektor gelangen zu lassen. Zu diesem Zweck ist es von Vorteil, die genannte Mattscheibe mit farbfilternder Wirkung auszustatten. Diese kann also z.B. als Rotfilter ausgeführt sein. Darüberhinaus ist es nützlich, die Mattscheibe durch sonnenblendenartige Abschattungsvorrichtungen vor einfallendem Fremdlicht zu schützen.
Gemäss der Erfindung handelt es sich also darum, eine Vorrichtung bereitzustellen, welche zumindest folgende Merkmale aufweist:
Die Vorrichtung ist als elektrooptisches Messgerät ausgeführt und dient zum Feststellen der Relativlage, die zwei Körper oder Oberflächenbereiche von Körpern in Bezug aufeinander einnehmen. Sie ist als Messanordnung mit mindestens einem Lichtstrahlsender und mindestens einem ein- oder mehrachsig wirkenden optoelektronischen Positionsdetektor mit lichtempfindlicher Messfläche ausgesaltet. Der Lichtstrahlsender ist dazu geeignet, einen gebündelten Lichtstrahl geringer Divergenz, insbesondere einen Laserstrahl, auf die lichtempfindliche Meßfläche des Positionsdetektors zu richten. Der Positionsdetektor ist in der Lage, Koordinaten des augenblicklichen Lichtstrahlauftreffpunktes auf der Messfläche entsprechende elektrische Signale zu liefern. Dem Positionsdetektor optisch vorgeschaltet ist eine meßbereichserweiternde und den optischen Strahlengang modifizierende Kombination aus in einem Gehäuse angebrachter Streuscheibe (40) sowie einem Projektionsobjektiv (50).
Die Erfindung wird vervollständigt durch ein Verfahren, mit dem es möglich ist, die gelieferten Koordinaten des augenblicklichen Lichtstrahlauftreffpunktes mit besonders hoher Genauigkeit zu ermitteln.

Diese und weitergehende Details sind aus der Zeichnung ersichtlich.

Es zeigt:
- Fig. 1: einen Strahlengang für einen Lichtstrahl geringer Divergenz und schmalen Querschnittes zwischen dem Lichtstrahlsender und dem optoelektronischen Positionsdetektor
- Fig. 2: ermittelte Positions-Werte für den Lichtstrahl-Auftreffpunkt in Abhängigkeit von vordefinierten Intensitäts-Schwellwerten

Der einen Lichtstrahl 22 aussendende Lichtstrahlsender 20 befindet sich auf z.B. einer ersten Welle 10. Dieser steht eine Welle 12 gegenüber, welche auszurichten ist. Anstelle der Wellen können andere auszurichtende Körper in Betracht kommen. Auf der Welle 12 ist in einem Gehäuse 30 eine Matt- oder Streuscheibe 40 angebracht, welche parallel einfallende Wellenfronten in nahezu alle Richtungen des Raumes streut. Diese Mattscheibe ist bevorzugt als Filter ausgestaltet, dass vorrangig Licht von der Farbe des vom Lichtstrahlsender 20 ausgesendeten Lichtstrahls 22 in Richtung des Positionsdetektors 60 durchgelassen wird. Der Positionsdetektor 60 arbeitet optoelektronisch, und kann bevorzugt nach zwei Richtungen (x und y) ausgelesen werden. Er ist kann als Positionssensierendes Halbleiterelement (PSD) ausgeführt sein, oder ein pixelorientierter Bildsensor sein.

Ein durch den Lichtstrahl 22 hervorgerufener Lichtpunkt 42 wird also durch die Mattscheibe 40 stark gestreut, so daß Informationen über seine Einfallsrichtung auf der Rückseite der Mattscheibe praktisch eliminiert sind. Dort können lediglich die Koordinaten der Lichtpunkt-Lage festgestellt werden. Gemäß der Erfindung geschieht dies mittels des Projektionsobjektives 50, welches von ausreichender Lichtstärke sein sollte, aber lediglich auf die Wellenlänge des Lichtstrahles 22 abgestimmt zu sein braucht und daher von einfacher Struktur sein kann. Es kann daher als Plastic-Linse ausgeführt sein, welche zur Verbesserung der Filterwirkung gegen andersfarbiges Fremdlicht ebenfalls eingefärbt sein kann und als zusätzliche Filtereinrichtung wirkt. Die Brennweite des Projektionsobjektives 50 ist gemäß den Gehäusedimensionen zu spezifizieren, so dass die Bildebene der Mattscheibe 40 mit brauchbarer Fokussierung auf die Bildebene des Positionsdetektors 60 verkleinernd abgebildet wird. Wie gezeigt, geht z.B. von dem der Lichtstreuung unterworfenen Bildpunkt 42 ein Lichtstrahl 122 aus, welcher auf das Projektionsobjektiv 50 auftrifft und danach als Bildpunkt 142 auf dem Positionsdetektor 60 registriert wird. Zur meßtechnischen Erfassung eines solchen Bildpunktes 142 ist eine an sich bekannte Mikroelektronik vorgesehen, welche mittels einer Datenleitung und Steckvorrichtung 70 mit einem nachgeschalteten Computer in Verbindung steht, so dass dort interessierende Signale ausgewertet werden können. Die Auswertung solcher Signale geschieht bevorzugt zu dem Zweck, die beteiligten Maschinen oder Körper auszurichten. In an sich bekannter Weise kann es daher erforderlich sein, nicht nur eine einzelne Mattscheibe samt Objektiv und Positionsdetektor zum Zwecke einer solchen Ausrichtung vorzusehen, sondern eine Mehrzahl dieser Systemkomponenten.

Das vorgeschlagene Meßverfahren erzielt seine beachtenswerte Genauigkeit auch dadurch, daß mehrere, typischerweise einige hundert oder noch mehr auswertbare Bildpunkte (pixel) durch den Laserstrahl bzw. das Abbild eines auf dem Target zu beobachtenden Lichtflecks erzeugt werden. Durch Mittelwertbildung kann die Lage des zu vermessenden Lichtfleckes mit hoher Präzision angegeben werden. - Gemäß der Erfindung kann ein Verfahren angegeben werden, mit dem es möglich ist, eine besonders genaue Mittelwertbildung durchzuführen, so daß die Koordinaten bezüglich eines x- und eines y-Wertes des auf dem Target zu beobachtenden Lichtflecks mit besonders hoher Präzision angegeben werden können.

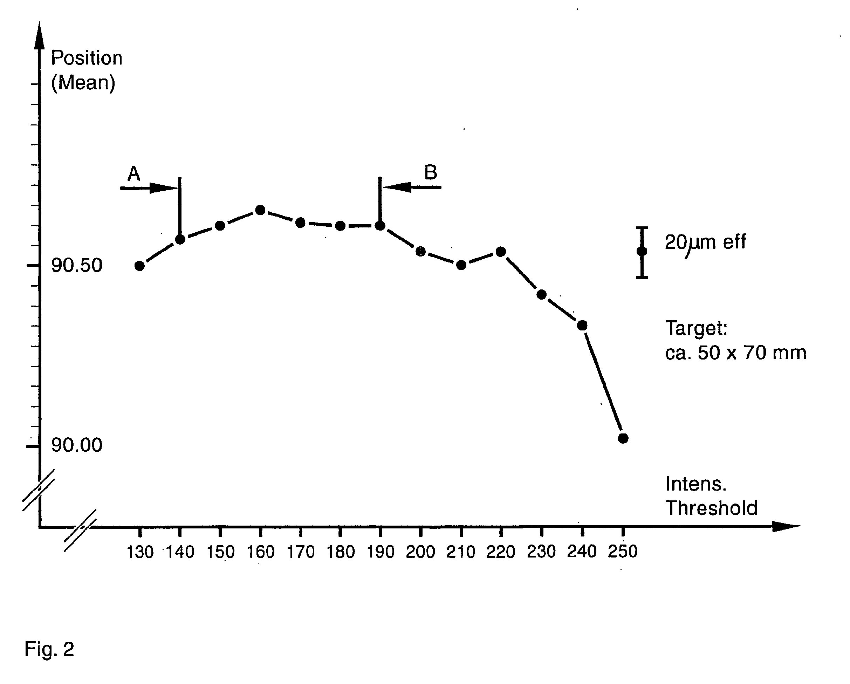

Wie gefunden wurde, und in Fig. 2 dargestellt, hängen die ermittelbaren Positionen des Lichtfleckes nämlich etwas davon ab, ob alle beleuchteten Bildpunkte (Pixels) zum Zwecke einer Mittelwertbildung ausgewertet werden, oder nur solche, die sich durch eine Mindesthelligkeit, ggf. eine Maximalhelligkeit, auszeichnen.
Gemäß der Erfindung ist es nämlich von Vorteil, nur solche Bildpunkte auszuwerten, die sich durch eine bestimmte Minimalhelligkeit auszeichnen, auch wenn dadurch ein Teil der zur Verfügung stehenden Informationen unberücksichtigt bleibt.
In Fig. 2 wird dargestellt, wie per Mittelwertbildung unterschiedliche Positions-Angaben für z.B. die x-Koordinate des Lichtfleckes errechnet werden, und zwar in Abhängigkeit einer vorgegebenen Mindesthelligkeit der ausgewerteten Bildpunkte (Pixels). Die Mindesthelligkeit wird durch eine Schwellwertvorgabe (Threshold) definiert, welche z.B. in der Abszisse von Fig. 2 zwischen den Werten 130 bis 250 variiert wurde. Wie ersichtlich, ist es unvorteilhaft, die hellsten Bildpunkte auszuwerten, und ebenso ist es unvorteilhaft, zu dunkle Bildpunkte auszuwerten, da dies zu einer scheinbaren Verlagerung des Schwerpunktes des beobachteten Lichtfleckes führt. Eine präzise und von Beleuchtungseffekten möglichst wenig abhängige Positionsangabe für den Lichtfleck gelingt, wenn bevorzugt die Bildpunkte mittlerer Helligkeit einer gewünschten Mittelwertbildung zugeführt werden. Dies ist in Fig. 2 also der Bereich, welcher etwa oberhalb eines Schwellwertes von 140 liegt, und unterhalb eines Schwellwertes von 190, wie durch Pfeile "A" und "B" gekennzeichnet.
Gemäß der Erfindung wird ein bevorzugter Schwellwertbereich in automatischer Weise durch einen auswertenden Rechner definiert, welcher dem Positionsdetektor 60 nachgeschaltet ist. Dies geschieht dadurch, daß für einen aktuell auszuwertenden Lichtfleck ein vergleichbarer Funktionsverlauf ermittelt wird, wie er aus Fig. 2 ersichtlich ist. Im Bereich des Maximums einer auf diese Weise ermittelten Funktion "scheinbarer Schwerpunktswert vs. Schwellwert" wird ein Plateau mit vordefinierter Varianz der Funktionswerte vermutet, und nur Lichtpunkte (pixels), deren Intensität einem solcherart definierten Plateu zuzuordnen sind, werden sodann zur Festlegung des besten Wertes für den Schwerpunkt des Lichtflecks herangezogen. Dieses Verfahren wird sukzessive sowohl für die x- und die y-Koordinate des Schwerpunktes des beobachteten Lichtflecks angewendet.
Wie erwähnt, können Lichtpunkte selektiert werden, welche sich durch zumindest eine minimale Helligkeit auszeichnen. In einer weitergehenden Selektion können dann nur solche Lichtpunkte dem weiteren Rechnungsgang zugrunde gelegt werden, welche zusätzlich nicht heller sind, als durch einen oberen Schwellwert vorgegeben. - Durch die angegebenen Verfahren kann die Genauigkeit der Positionsbestimmung für einen zu beobachtenden Lichtfleck deutlich gesteigert werden, so daß für ein Target mit effektiven Dimensionen von ca. 50 * 70 mm die Position des auftreffenden Laserlichtes auf besser als +/- 10 Micrometer bestimmbar ist. - Wiewohl im obenstehenden nur dargelegt wird, in welcher Form die Schwerpunktslage eines Lichtfleckes für eine Koordinate verbessert ermittelt werden kann, versteht es sich, daß die zweimalige Anwendung des Verfahrens, nämlich sowohl in z.b. X- als auch in Y-Richtung, eine insgesamt verbesserte Schwerpunktsbestimmung für den Lichtfleck nach beiden Koordinaten ermöglicht.

## Patentansprüche

1. Elektrooptisches Messgerät zum Feststellen der Relativlage, die zwei Körper oder Oberflächenbereiche von Körpern in Bezug aufeinander einnehmen, mit einer Messanordnung mit mindestens einem Lichtstrahlsender und mindestens einem ein- oder mehrachsig wirkenden optoelektronischen Positionsdetektor mit lichtempfindlicher Messfläche, wobei der Lichtstrahlsender einen gebündelten Lichtstrahl geringer Divergenz, insbesondere einen Laserstrahl auf die lichtempfindliche Meßfläche des Positionsdetektors richtet und dieser den Koordinaten des augenblicklichen Lichtstrahlauftreffpunktes auf der Messfläche entsprechende elektrische Signale liefert,
**gekennzeichnet durch** mindestens eine meßbereichserweiternde und den optischen Strahlengang modifizierende Kombination aus in einem Gehäuse angebrachter Streuscheibe (40), Projektionsobjektiv (50) und Positionsdetektor (60).

2. Verfahren zum Feststellen der Relativlage, die zwei Körper oder Oberflächenbereiche von Körpern in Bezug aufeinander einnehmen, unter Verwendung einer Messanordnung nach Anspruch 1, **gekennzeichnet durch** folgende Verfahrensschritte:
- Erzeugung eines Lichtstrahlauftreffpunktes auf einem zweidimensionalen durchscheinenden Targets
- Abbildung des Lichtstrahlauftreffpunktes auf der Meßfläche eines zweidimensional auslesbaren optoelektronischen Targets
- Registrierung der Lichtintenisität für alle Bildelemente (pixel) des Sensors, welche
**durch** den abgebildeten Lichtstrahlauftreffpunkt illuminiert werden
- mehrfache Ermittlung eines Schwerpunktes für die auf dem Sensor registrierte Lichtintensität, nach einer oder zwei Koordinaten, und zwar in Abhängigkeit von mehreren vordefinierten Intensitäts-Schwellwerten
- Ermittlung der funktionalen Abhängigkeit der Schwerpunktslage von den mehreren vordefinierten Intensitäts-Schwellwerten
- Ermittlung eines Plateaubereiches für die Funktionale Abhängigkeit der Schwerpunktslage, vs. den mehreren vordefinierten Intensitäts-Schwellwerten, nach mindestens einer dem optoelektronischen Target zugeordneten Kordinate
- Heranziehung eines Maximalwertes der Schwerpunktslage oder eines zu den Plateubegrenzungen symmetrisch liegenden Wertes der Schwerpunktslage zur Definition eines Bestwertes der Schwerpunktslage eines zu vermessenden Lichtfleckes
- Verwendung des derart definierten Bestwertes in einem weiteren Rechengang, bei dem die gegenseitige Relativlage von Gegenständen, insbesondere Maschinenwellen, errechnet wird.

3. Verfahren nach Anspruch 2, **gekennzeichnet durch** folgende zusätzlich bzw. alternativ auszuführende Verfahrensschritte:
- Ermittlung eines Schwerpunktes für die registrierte Lichtintensität auf dem optoelektronischen Sensor, nach einer oder zwei Koordinaten, und zwar unter Berücksichtigung nur derjenigen Bildpunkte, deren Intensität dem Intensitätsintervall entspricht, welches einem ermittelten Plateubereich ("A-B") einer Funktion "Schwerpunktslage vs. Intensitäts-Schwellwert" zugeordnet ist
- Verwendung des so ermittelten Schwerpunktes zur Definition eines Bestwertes der Schwerpunktslage für einen zu vermessenden Lichtfleck.
